Europäisches Patentamt

(19) European Patent Office

Office européen des brevets

(11) Publication number: **0 276 137**
**A2**

(12) **EUROPEAN PATENT APPLICATION**

(21) Application number: **88300442.6**

(22) Date of filing: **20.01.88**

(51) Int. Cl.⁴: **F 16 L 13/02**
**F 16 L 13/11**

(30) Priority: **22.01.87 GB 8701410**

(43) Date of publication of application:
**27.07.88 Bulletin 88/30**

(84) Designated Contracting States: **DE FR GB IT NL**

(71) Applicant: **LAND & MARINE ENGINEERING LIMITED**
**66-68 The Albany Old Hall Street**
**Liverpool, L3 9EP (GB)**

(72) Inventor: **Reynolds, John Michael**
**Sunwards Gayton Road**
**Heswall Wirral Merseyside (GB)**

**Swaine, Barry**
**1 Winnington Road**
**Hoylake Wirral Merseyside (GB)**

(74) Representative: **Stringer, David Hiram et al**
**W.P. THOMPSON & CO Coopers Building Church Street**
**Liverpool L1 3AB (GB)**

(54) **Improvements relating to pipe joints.**

㊗ The present specification discloses a pipe joint for use in connecting two lengths of pipeline. A known pipe joint is formed by various prefabricated parts which are welded together. However, such a joint is relatively expensive due to the required accurate manufacture and assembly of the component parts. Also such a joint can have inherent weaknesses due to defective welds, and besides being bulky, the usual internal finish can cause turbulence in the flow therethrough.

The present invention provides a pipe joint part comprising a generally cylindrical hollow member (1) of one-piece construction. The cylindrical member (1) has an annular groove (11) formed in one axial end face of the wall, the groove (11) extending axiaily of said cylindrical member. To join two lengths of pipeline (3), a cylindrical member (1) is weded to an end of each length of pipeline (3) and said cylindrical members (1) are coaxially aligned with each other. The cylindrical members (1) are then brouqht axially together with a cylindrical liner (13) engaging in the aligned grooves (11), the liner being a snug fit with the radially inner walls of the grooves (11) the outer part (10) of this butt Joint (15) is then welded and the grooves (11) filled with sealant via a bore (17) which is subsequently plugged. This construction allows the pipe joint parts (1) to be simply and accurately machined, thus overcoming previous defects with prior art construction.

Fig 2

**Description**

IMPROVEMENTS RELATING TO PIPE JOINTS

The present invention relates to a pipe joint for use in connecting two sections of pipe.

More particularly the present invention relates to a pipe joint for use in connecting two lengths of pipeline, the pipe joint being of the type commonly known as a 'Reynold's Joint'. The commonly known Reynold's Joint is formed by two prefabricated parts which are each made of a number of steel components, said components being welded together. Each said part of the joint comprises an inner cylindrical member located coaxially within a larger diameter, outer cylindrical member with a frusto-conical member being welded both to one axial end of the outer cylindrical member and to one end of said inner cylindrical member. The respective other ends of said inner and outer cylindrical members are aligned with each other in a plane transverse to their common longitudinal axis.

In use, each said part is welded to an end of a section of pipeline, the inner cylindrical member together with the attached end of said frusto-conical member being of the same diameter as the pipeline. The inner surfaces of said pipeline and said inner cylindrical member are then provided with a coat of epoxy resin which extends around the free end of said inner cylindrical member. To secure the pipeline sections together the two said parts are aligned coaxially and brought together so that a cylindrical linear engages snugly over the respective abutting end regions of said inner cylindrical members. In this position the respective outer cylindrical members abut together and can be butt welded together, the cylindrical liner protecting the epoxy resin coating. When welded together the annular space defined by the said members of the respective parts, is filled via one or more apertures in such outer cylindrical member, with a sealant such as bitumen thus completing the joint.

As will be appreciated the above fabricated joint is relatively expensive to manufacture due to the necessary accurate manufacture of the various mating components which have to be welded together i.e. the inner and outer cylindrical members and said frusto-conical members have to be welded together this being a somewhat lengthy and difficult operation to produce the desired accuracy and best finish. Further due to the necessity for welding the parts together, inherent weaknesses due to weld defects can be present and additionally the joint can have rough internal and external surfaces which can affect installation and subsequent fluid flow along the pipeline. For example, the weld between the frusto-conical member and the inner cylindrical member, in practice leaves an annular shoulder which with subsequent high velocity fluid flow through the pipeline, can produce turbulence and result in a build-up of any entrained material behind the shoulder. Clearly this is undesirable. Additionally, due to its fabricated form, the joint is radially bulky with respect to the general pipeline diameter and this is disadvantageous especially in directional drilling applications where the pipeline is pulled through a pre-formed bore.

The aim of the present invention is to provide a pipe joint part which is of the same type as the above described Reynold's Joint but which is relatively simple to manufacture, is free of possible weld defects, and can provide a smooth internal and external finish, and a compact outer profile.

According to the present invention there is provided a pipe joint part comprising a generally cylindrical hollow member of one-piece construction, having an annular groove formed in one axial end face of the wall of said generally cylindrical member, said annular groove extending axially of said cylindrical member.

In a preferred embodiment of the present invention, said generally cylindrical member is produced by machining, and has a uniform internal diameter along its length, with a thickened wall at said one axial end region as compared to the other axial end region. The annular groove is formed also by machining, in the axial end face of the thickened wall region and is preferably coaxial with the longitudinal axis of the cylindrical member, the radially opposite walls of the groove defining inner and outer sections of the joint.

In use, two accurately matching pipe point parts are designed and constructed with their respective uniform internal diameters the same as the internal diameters of the pipeline sections to which they are to be attached. Said other axial end region of each generally cylindrical member is then butt welded to one end of a pipeline section and the pipeline sections are subsequently lined with an epoxy resin coating which extends over the axial end face of the cylindrical member and at least part way into the annular groove. Later, when the pipeline sections are to be connected together, they are first coaxially aligned with each other and a cylindrical steel liner is inserted in one annular groove so as to project therefrom the liner being a snug fit with the radially inner wall of the annular groove. The pipeline sections are then moved axially together so that the steel liner engages in the groove in the other cylindrical member and the facing axial end faces of the respective cylindrical members interengage. The radially outer sections of the joint are then welded together and the void formed by the annular grooves is filled with a sealant, e.g. Bitumen, via one or more holes in the outer wall sections of each cylindrical member. The liner prevents the epoxy coating from being damaged during welding and also prevents sealant from entering the pipeline.

By virtue of the one-piece construction of the present invention, the pipe joint parts can be relatively simply and quickly, and therefore cheaply, machined to a high tolerance avoiding the necessity for fabrication welds which might be defective and require some repairs at some time. Further such pipe joint parts can thus be readily formed with smooth interior and exterior surfaces, facilitating installation and subsequent pipeline fluid flow. Also, due to the fact that the groove can be simply provided by machining, the overall dimensions of the joint may be maintained comparable with the pipeline dimensions, thereby facilitating installation of the pipeline by directional drilling techniques.

The present invention will now be further described, by way of example, with reference to the accompanying drawings, in which:

Fig. 1 is a partial axial cross-sectional view through one embodiment of a joint constructed using the present invention, and

Fig. 2 is an enlarged axial cross-sectional view of a section of the wall of one part of the joint shown in Fig. 1.

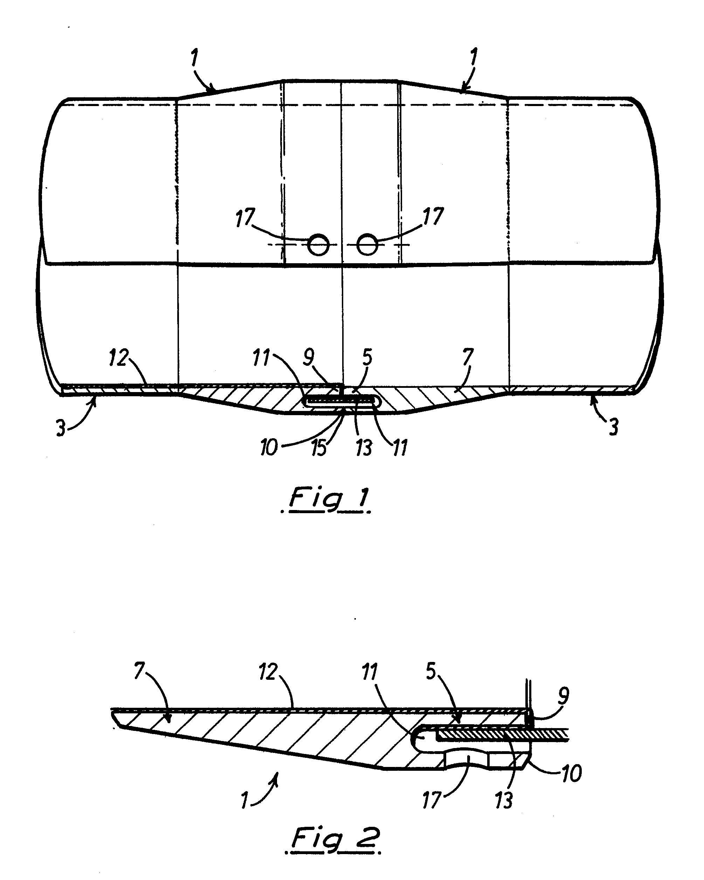

The joint shown in Fig. 1 of the accompanying drawings comprises two generally cylindrical members (1), each of which has a constant internal diameter equal to the internal diameter of the pipeline sections (3) to which they are attached, i.e. welded.

Each generally cylindrical member (1) has a thickened wall towards one axial end region (5), as compared to the other axial end region (7), said other axial end region (7) being butt welding as at (0), to one end of a pipeline section (3). The axial end (9,10) of the thickened wall region (5) is provided with an annular groove (11) which is coaxial with the longitudinal axis of the cylindrical member (1) and which extends axially of the generally cylindrical member (1); the annular groove (11) dividing the said axial end face into a radially inner and a radially outer annular land, these lands being identified by reference numerals 9 and 10 respectively. After being butt welded to a pipeline section (3) both the pipeline section (3) and the generally cylindrical member (1) are lined with an epoxy resin coating (12) which extends around the land (9) of said axial end face, into the annular groove (11).

When two such pipeline sections (3) are to be interconnected as shown in Fig. 1, the pipeline sections (3) are coaxially aligned with each other and a cylindrical steel liner (13) is located in the annular groove (11), the liner (13) being a snug fit against the radially inner wall of the annular groove (11) and projecting axially out of the groove (11). The pipeline sections (3) are then moved axially together so that the liner (13) engages the annular groove (11) in the other generally cylindrical member (1), and the coatings (12) on said axial end faces (9), interengage. Said radially outer lands (10) of said axial end faces are then butt welded together at (15), liner (13) protecting the epoxy coating (12) from damage by weld spatter. Welding being complete, the void defined by the annular grooves (11) is filled with a sealant, e.g. Bitumen, via one or more holes (17). The holes (17) are subsequently plugged and welded, completing the joint. Sealant is prevented from entering the pipeline by virtue of the provision of the steel liner (11) over the butt joint between said radially inner bands (9) of said axial end faces.

As will be appreciated the said generally cylindrical members (1) can be accurately machined thus simplifying manufacture and avoiding the weld defects which can occur in prior art prefabricated joints. Further, a smooth interior and external finish can be easily attained, enhancing installation and subsequent fluid flow along the pipeline. Also, as the annular grooves (11) can be machined and dimensions thereby kept to a minimum, the overall dimensions of the joint can be maintained close to the dimensions of the pipeline sections (3), facilitating installation by directional drilling techniques.

The present invention thus provides a simple and relatively cheap pipe joint which can be more accurately manufactured than its prior art equivalent.

## Claims

1. A pipe joint part characterised by a generally cylindrical hollow member (1) of one-piece construction, having a generally cylindrical wall with an annular groove (11) formed in one axial end face (9,10) of the wall, said annular groove (11) extending axially of said cylindrical member (1).

2. A pipe joint part as claimed in claim 1, wherein said generally cylindrical member (1) has a uniform internal diameter along its length, with a thickened wall at one axial end region (5) as compared to the other axial end region (7), the annular groove (11) being formed in the axial end face (9,10) of the thickened end region (5).

3. A pipe joint part as claimed in claim 1 or claim 2, wherein the cylindrical member (1) and said annular groove (11) are produced by machining.

4. A pipe joint part as claimed in any one of claims 1 to 3, wherein the annular groove (11) is coaxial with the longitudinal axis of the cylindrical member (1).

5. A pipe joint part as claimed in any of claims 1 to 4, wherein a coating (12) lines the cylindrical member (1) and extends around said one axial end region (9) and into said groove (11).

6. A pipe joint part as claimed in any one of claims 1 to 5, wherein the other axial end face of the wall is welded (8) to a pipe section (3), the internal diameter of the pipe section (3) being substantially the same as the internal dimension of the cylindrical member (1), with the weld (8) presenting a smooth internal profile on line with both said pipe section (3) and said cylindrical member (1).

7. A pipe joint characterised by two accurately matching pipe joint parts, each part comprising a generally cylindrical, hollow member (1) of one-piece construction, having a generally cylindrical wall with an annular groove (11) formed in one axial end face (9,10) of the wall, said annular groove (11) extending axially of said cylindrical member (1), said cylindrical members (1) being arranged coaxially with each other, with said one axial end faces (9,10) abutting each other and a cylindrical liner (13) exrending into both said annular grooves (11).

8. A pipe joint as claimed in claim 7, wherein the cylindrical liner (13) is a snug fit with the radially inner walls of the annular grooves (11).

9. A pipe joint as claimed in claim 7 or claim 8, wherein each said generally cylindrical hollow member (1) has a uniform internal diameter along its length with a thickened wall at one axial end region (5) as compared to the other axial end region (7), the annular groove (11) being formed in the axial end face (9,10) of the thickened end region (5).

10. A pipe joint as claimed in any one of claims 7 to 9, wherein the annular grooves (11) in each cylindrical member (1) are coaxial with the longitudinal axis of the cylindrical member (1).

11. A pipe joint as claimed in any one of claims 7 to 10, wherein each cylindrical member (1) has an internal coating (12) which extends around part (9) of said one axial end face (9,10) and into the said annular groove (11).

12. A pipe joint as claimed in any one of claims 7 to 11, wherein said annular grooves (11) are filled with a sealant material.

13. A pipe joint as claimed in any one of claims 7 to 12, wherein the abutting axial end face regions (10) of said generally cylindrical members (1), radially beyond said annular grooves (11), are welded together.

14. A pipe joint as claimed in any one of claims 7 to 13, wherein the other axial end region (7) of each cylindrical member (1) is welded to a pipe section (3), the internal diameter of the pipe section (3) being the same as the internal dimensions of the cylindrical members (1).

0276137

*Fig 1*

*Fig 2*